# FASCICULE DE BREVET EUROPEEN

(11) **EP 3 300 640 B1**
(45) Date de publication et mention de la délivrance du brevet: **21.08.2019**
(21) Numéro de dépôt: 17193273.4
(22) Date de dépôt: 26.09.2017
(51) Int. Cl.: A47J 27/08, A47J 36/06

(54) **SOUS-ENSEMBLE DE COUVERCLE, AUTOCUISEUR POURVU D'UN TEL SOUS-ENSEMBLE ET PROCÉDÉ DE FABRICATION AFFÉRENT**
UNTEREINHEIT EINES DECKELS, SCHNELLKOCHTOPF, DER MIT EINER SOLCHEN UNTEREINHEIT AUSGESTATTET IST, UND ENTSPRECHENDES HERSTELLUNGSVERFAHREN
LID SUB-ASSEMBLY, PRESSURE COOKER PROVIDED WITH SUCH A SUB-ASSEMBLY AND ASSOCIATED MANUFACTURING METHOD

(30) Priorité: 30.09.2016 FR 1659463
(43) Date de publication de la demande: 04.04.2018
(73) Titulaire: SEB S.A., 69130 Ecully (FR)
(72) Inventeur: GEHANT, Luc, André, 21260 SELONNGEY (FR); DESCREUX, Franck, 21000 DIJON (FR); PAZZAGLIA, Elise, 21120 IS-SUR-TILLE (FR)
(74) Mandataire: Weber, Jean-François

(56) Documents cités:
- EP-A1- 2 016 874
- CN-A- 104 545 427
- CN-U- 204 218 653
- KR-A- 20150 102 666

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un sous-ensemble de couvercle destiné à être associé à une cuve d'appareil de cuisson d'aliments sous pression pour former avec cette dernière une enceinte de cuisson sous pression, ledit sous-ensemble de couvercle comprenant une pluralité de composants parmi lesquels au moins :
- un couvercle métallique présentant une face interne destinée à se trouver en regard de l'intérieur de ladite enceinte et une face externe opposée,
- et une pluralité d'éléments de liaison métalliques attachés de façon permanente et indémontable au couvercle et de façon à faire saillie de ladite face externe pour relier mécaniquement ledit couvercle avec d'autres composants dudit sous-ensemble de couvercle.

La présente invention concerne également un appareil de cuisson d'aliments sous pression comprenant un tel sous-ensemble de couvercle, ainsi qu'un procédé de fabrication d'un tel sous-ensemble de couvercle.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve.

Ces appareils connus comportent également généralement des organes de commande du verrouillage/déverrouillage, se présentant par exemple sous la forme de boutons, leviers ou anses mobiles ou fixes, ainsi que différents organes de sécurité (doigt de sécurité à l'ouverture, soupape de sécurité...) et de fonctionnement (traverse de positionnement du couvercle sur la cuve, soupape de régulation, sélecteur de tarage de soupape...). Les moyens de verrouillage, de même que les différents organes précités ainsi que des pièces d'habillage sont attachés au couvercle et forment avec ce dernier un sous-ensemble de couvercle destiné à être rapporté sur un sous-ensemble de cuve formé par la cuve elle-même et les poignées dont cette dernière est équipée, pour constituer une enceinte de cuisson capable de monter en pression.

Afin d'assurer la fixation sur le couvercle des différents éléments et organes de fonctionnement, de sécurité et d'habillage susvisé, il est nécessaire de fixer de manière robuste et durable au couvercle différentes pièces métalliques (goujons, douille filetée ou non, axes filetés ou non...) indispensables pour assurer une liaison mécanique fonctionnelle et robuste entre le couvercle proprement dit et les différents éléments et organes portés par ce dernier.

Les pièces métalliques précitées sont donc assujetties au couvercle par des opérations d'assemblage conduisant à une liaison mécanique robuste, afin de pouvoir résister aux efforts de traction et/ou de cisaillement auxquelles lesdites pièces métalliques sont appelées à être soumises lors du fonctionnement de l'appareil.

A cette fin, il est par exemple connu de recourir à des opérations de sertissage, et/ou de vissage, avec le cas échéant un poinçonnage préalable du couvercle.

Ces sous-ensembles de couvercle connus donnent globalement satisfaction, en ce qu'ils sont à la fois robustes et fiables.

Un exemple de sous-ensemble de couvercle connu est décrit dans le document KR 2015 0102666 A.

Ils n'en présentent pas moins différents inconvénients.

Ainsi, ces sous-ensembles de couvercle connus présentent généralement une masse importante qui peut rendre leur maniement inconfortable et malaisé. Cette masse importante provient en particulier de la nécessité de recourir à un couvercle métallique d'épaisseur significative. Cette épaisseur est requise en particulier pour assurer une fixation fiable et pérenne des différentes pièces métalliques de liaison évoquées précédemment.

Un autre inconvénient provient du fait que la fixation au couvercle de certaines desdites pièces métalliques de liaison requiert la mise en oeuvre de différentes opérations préalables (poinçonnage par exemple) et surtout postérieures (ébavurage, polissage, nettoyage, reprise, masquage...) qui compliquent le processus de fabrication industriel et majorent le prix de revient du sous-ensemble de couvercle.

En outre, la conception des sous-ensembles de couvercle connus tend à compliquer le nettoyage de la face interne du couvercle par l'utilisateur, en raison de la présence sur la surface interne du couvercle d'une multiplicité d'aspérités qui gênent le nettoyage et forment autant de zones favorisant l'encrassage au fil de l'utilisation de l'appareil. Ces aspérités sont par exemple formées par des pièces métalliques de fixation (écrous...) et/ou des déformations localisées du couvercle générées par les opérations de fixation des pièces métalliques de liaison susvisées.

Par ailleurs, lorsque le mode de fixation des pièces métalliques de liaison au couvercle implique de recourir à un poinçonnage préalable du couvercle, il est ensuite nécessaire de rétablir l'étanchéité du couvercle au niveau dudit poinçonnage, ce qui peut s'avérer complexe et coûteux dans certaines situations, avec un risque de défaut de fiabilité, en particulier sur le long terme ou dans des situations de sollicitations extrêmes (surpression...).

Certains modes de fixation entraînent en outre un risque de démontage intempestif, qui pourrait dans la pire des situations être suivi d'un remontage incorrect susceptible de mettre en danger l'utilisateur.

L'invention se propose par conséquent de remédier aux différents inconvénients exposés précédemment et de proposer un nouveau sous-ensemble de couvercle qui, tout en présentant un aspect irréprochable, est facile à nettoyer, rapide et peu coûteux à fabriquer, tout en étant robuste et fiable, et de conception et construction permettant un allégement significatif.

Un autre objet de l'invention vise à proposer un nouveau sous-ensemble de couvercle particulièrement léger.

Un autre objet de l'invention vise à proposer un nouveau sous-ensemble de couvercle de construction simple et robuste.

Un autre objet de l'invention vise à proposer un nouveau sous-ensemble de couvercle particulièrement fiable, notamment en matière d'étanchéité.

Un autre objet de l'invention vise à proposer un nouveau sous-ensemble de couvercle qui non seulement est particulièrement sûr et compact, mais présente également une esthétique optimale à moindre coût.

Un autre objet de l'invention vise à proposer un nouveau sous-ensemble de couvercle dont le mode de fabrication autorise une grande liberté de conception.

Un autre objet de l'invention vise à proposer un nouvel appareil de cuisson sous pression comprenant un sous-ensemble de couvercle dont la construction et la conception permettent d'en réduire le poids ainsi que le coût et la complexité de fabrication, tout en facilitant son nettoyage.

Un autre objet de l'invention vise à proposer un nouveau procédé de fabrication d'un sous-ensemble de couvercle qui permet d'obtenir de façon simple, rapide et peu coûteuse un sous-ensemble de couvercle à l'esthétique irréprochable, facile à nettoyer et extrêmement fiable et robuste.

Les objets assignés à l'invention sont atteints à l'aide d'un sous-ensemble de couvercle destiné à être associé à une cuve d'appareil de cuisson d'aliments sous pression pour former avec cette dernière une enceinte de cuisson sous pression, ledit sous-ensemble de couvercle comprenant une pluralité de composants parmi lesquels au moins :
- un couvercle métallique présentant une face interne destinée à se trouver en regard de l'intérieur de ladite enceinte et une face externe opposée,
- et une pluralité d'éléments de liaison métalliques attachés de façon permanente et indémontable au couvercle et de façon à faire saillie de ladite face externe pour relier mécaniquement ledit couvercle avec d'autres composants dudit sous-ensemble de couvercle,
caractérisé en ce que chacun desdits éléments de liaison métalliques est attaché audit couvercle exclusivement au moyen d'un cordon de soudure laser respectif qui s'étend uniquement sur à la fois ladite face externe et l'élément métallique concerné.

Les objets assignés à l'invention sont également atteints à l'aide d'un appareil de cuisson sous pression comprenant un tel sous-ensemble de couvercle.

Les objets assignés à l'invention sont en outre atteints à l'aide d'un procédé de fabrication d'un sous-ensemble de couvercle, lequel sous-ensemble de couvercle est destiné à être associé à une cuve d'appareil de cuisson d'aliments sous pression pour former avec cette dernière une enceinte de cuisson sous pression, ledit sous-ensemble de couvercle comprenant une pluralité de composants parmi lesquels au moins un couvercle métallique et une pluralité d'éléments de liaison métalliques, ledit procédé comprenant au moins les étapes suivantes :
- une étape de fabrication ou de fourniture dudit couvercle métallique, lequel présente une face interne destinée à se trouver en regard de l'intérieur de ladite enceinte et une face externe opposée,
- et une étape de fixation de ladite pluralité d'éléments de liaison métalliques au couvercle, au cours de laquelle lesdits éléments métalliques sont attachés au couvercle de façon permanente et indémontable et de façon à faire saillie de ladite face externe pour relier mécaniquement ledit couvercle avec d'autres composants dudit sous-ensemble de couvercle,
caractérisé en ce que chacun desdits éléments métalliques est attaché audit couvercle exclusivement au moyen d'un procédé de soudure laser, de façon à ce que chaque cordon de soudure laser respectif s'étende uniquement sur à la fois ladite face externe et l'élément métallique concerné.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :
- La figure 1 illustre, selon une vue schématique en perspective, un appareil de cuisson d'aliments sous pression conforme à l'invention, ledit appareil de cuisson sous pression étant équipé d'une cuve et d'un sous-ensemble de couvercle conforme à l'invention, lesdits cuve et sous-ensemble de couvercle étant associés dans une configuration de verrouillage dans laquelle le couvercle est verrouillé relativement à la cuve pour former avec cette dernière une enceinte de cuisson capable de monter en pression.
- La figure 2 illustre, selon une vue schématique en perspective de dessus, le sous-ensemble de couvercle de l'appareil de la figure 1, dans une configuration correspondant au verrouillage.
- La figure 3 illustre, selon une vue schématique en perspective de dessus, le sous-ensemble de couvercle de la figure 2 dans une configuration correspondant au déverrouillage.
- La figure 4 illustre, selon une vue schématique en perspective de dessus, le couvercle métallique du sous-ensemble des figures 2 et 3 auquel sont attachés de façon permanente une pluralité d'éléments de liaison métallique formés en l'espèce par deux goujons périphériques, un axe central fileté intérieurement, un axe excentré et une douille excentrée au sein de laquelle coulisse axialement un doigt de sécurité.
- La figure 5 correspond à une vue une éclatée de l'ensemble unitaire de !a figure 4 formé par le couvercle métallique et la pluralité d'éléments de liaison métalliques fixés au couvercle.
- La figure 6 illustre, selon une vue schématique en perspective de dessous, l'ensemble couvercle métallique/pluralité d'éléments de liaison métalliques de la figure 4.
- La figure 7 est une vue en coupe d'un détail de la figure 4.
- La figure 8 est une vue en coupe d'un autre détail de la figure 4.

L'invention concerne en premier lieu un sous-ensemble de couvercle 1 destiné à être associé à une cuve 2 d'appareil de cuisson d'aliments sous pression 3 pour former avec ladite cuve 2 une enceinte de cuisson sous pression. L'invention concerne également en tant que tel un appareil de cuisson sous pression 3 comprenant un tel sous-ensemble de couvercle 1. L'appareil de cuisson sous pression 3 est destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 3 et en présence des aliments, d'un liquide de cuisson, par exemple un liquide aqueux. L'appareil 3 selon l'invention est préférentiellement destiné à un usage domestique, étant entendu toutefois que l'invention peut également concerner des appareils professionnels ou semi-professionnels.

L'appareil 3 conforme à l'invention est conçu pour monter en pression exclusivement sous l'effet d'une source de chauffe (embarquée ou externe), sans apport de pression externe. L'appareil 3 de cuisson d'aliments sous pression constitue donc un autocuiseur, destiné préférentiellement à être disposé sur une plaque de cuisson indépendante pour en chauffer le contenu. Comme cela est connu en soi, la cuve 2 forme un récipient de cuisson, destiné à accueillir les aliments à cuire et présente en l'espèce sensiblement une symétrie de révolution selon un axe vertical central X-X', lequel s'étend selon une direction qui s'apparente à la direction verticale lorsque l'appareil 3 est en fonctionnement normal, c'est-à-dire repose sur un plan horizontal. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre, qui est en l'espèce de forme circulaire, et qui délimite une ouverture d'accès à l'intérieur de la cuve 2. Dans le mode de réalisation illustré aux figures, le bord supérieur libre de la cuve 2 est pourvu d'excroissances radiales formant des rampes de cuve destinées à coopérer avec des rampes de couvercle correspondantes pour former un mécanisme de verrouillage à baïonnette permettant de verrouiller le couvercle relativement à la cuve, afin de permettre à l'enceinte de cuisson ainsi formée de monter en pression.

Comme illustré, le sous-ensemble de couvercle 1 comprend une pluralité de composants, parmi lesquels au moins un couvercle métallique 4 présentant une face interne 4A destinée à se trouver en regard de l'intérieur de l'enceinte de cuisson et une face externe opposée 4B. Le couvercle 4 est avantageusement réalisé en un matériau métallique, et de préférence formé par un flan métallique embouti. De préférence, le couvercle 4 est réalisé en acier inoxydable. Le couvercle métallique 4 présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans le mode de réalisation illustré aux figures, le couvercle 4 inclut un élément de couverture discoïde de forme et dimensions conjuguées à celle de l'ouverture d'accès délimitée par le bord supérieur libre de la paroi latérale annulaire 2B de la cuve 2. Dans ce mode de réalisation préférentiel, le couvercle 4 inclut également avantageusement une ceinture annulaire, par exemple de forme sensiblement cylindrique ou tronconique, qui s'élève entre un premier bord circulaire solidaire de l'élément de couverture discoïde (en l'espèce au niveau de la périphérie de ce dernier) et un second bord circulaire libre. De préférence, lorsque le couvercle 4 est associé à la cuve 2 pour former l'enceinte de cuisson, ladite ceinture annulaire s'étend sensiblement verticalement, c'est-à-dire parallèlement à l'axe central X-X'. De préférence, comme évoqué précédemment, le couvercle 4 porte des rampes de couvercle destinés à venir se positionner sous les rampes de cuve pour verrouiller le couvercle 4 relativement à la cuve 2, selon le mécanisme bien connu en tant que tel de verrouillage à baïonnette. En l'espèce, les rampes de couvercle sont formées par des déformations radiales centripètes 5A-5J de la ceinture annulaire, réalisées par une opération de découpe suivie d'une opération d'emboutissage pour former un crevé.

Le sous-ensemble de couvercle 1 comporte également classiquement une soupape de régulation de pression 19 montée sur le couvercle 4, en correspondance avec un orifice 19A ménagé à travers le couvercle 4, ainsi que de préférence une soupape de sécurité à la surpression (non visible aux figures) montée en correspondance avec un orifice 20 ménagé à travers le couvercle.

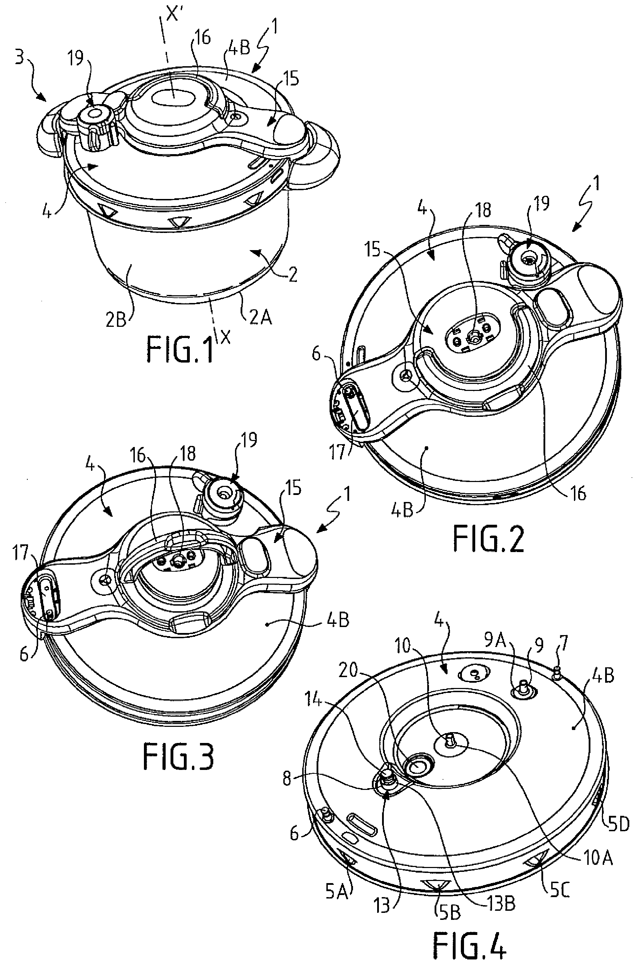

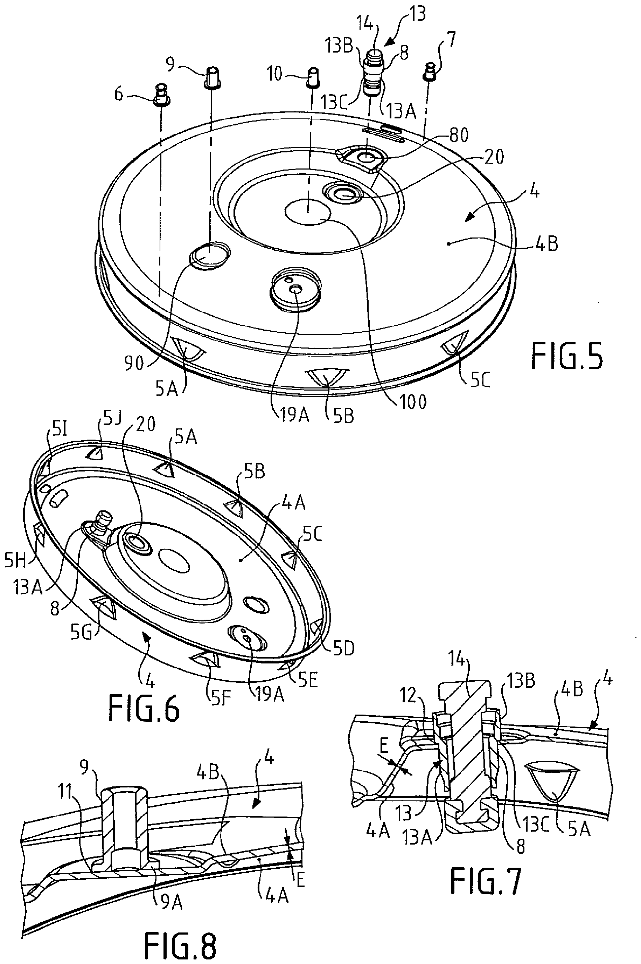

Conformément à l'invention, la pluralité de composants qui forment le sous-ensemble de couvercle 1 comprend également au moins une pluralité d'éléments de liaison métallique 6, 7, 8, 9, 10 attachés de façon permanente et indémontable au couvercle 4 et de façon à faire saillie de la face externe 4B dudit couvercle 4 pour relier mécaniquement ledit couvercle 4 avec d'autres composants dudit sous-ensemble de couvercle 1. Les 10 éléments de liaison métallique 6, 7,8, 9,10 s'élèvent ainsi à partir est au droit de la face externe 4B du couvercle 4, auxquels ils sont fixés de manière rigide et irréversible, afin d'assurer une liaison mécanique entre le couvercle 4 et d'autres pièces, métalliques ou non, faisant parties des composants du sous-ensemble de couvercles 1. Lesdits éléments de liaison métalliques 6, 7, 8, 9, 10 sont donc formés par des éléments distincts et indépendants du couvercle métallique 4, qui sont rapportés sur, et attachés à, ce dernier pour former un sous-ensemble métallique unitaire illustré aux figures 4 et 5.

Conformément à l'invention, chacun desdits éléments métalliques 6, 7, 8, 9, 10 est attaché au couvercle 4 exclusivement au moyen d'un cordon de soudure laser respectif qui s'étend uniquement sur à la fois ladite face externe 4B et l'élément métallique 6, 7, 8, 9, 10 concerné.

En d'autres termes, tous les éléments de liaison métallique 6, 7, 8, 9, 10 de ladite pluralité d'éléments précités sont tous individuellement attachés de façon fixe au couvercle 4 au moyen d'un cordon de soudure laser qui est disposé uniquement du côté de la face externe 4B du couvercle 4. Chaque cordon de soudure laser assure ainsi la liaison mécanique entre un élément métallique 6, 7, 8, 9, 10 et la face externe 4B du couvercle 4. La technologie de soudure laser employée confère à chacun des cordons de soudure laser des caractéristiques spécifiques identifiables, chacun desdits cordons de soudure formant un joint soudé résultant d'une fusion localisée de la matière formant l'élément métallique 6, 7, 8, 9, 10 concerné et la face externe 4B du couvercle 4, sans matériau d'apport. Chaque cordon de soudure laser résulte ainsi du refroidissement du bain de métal fondu développé dans et autour de l'espace interstitiel situé à l'interface de l'élément métallique 6, 7, 8, 9, 10 concerné et de la face externe 4B du couvercle 4. Chaque cordon de soudure laser présente ainsi une morphologie caractéristique aisément reconnaissable, lesdits cordons de soudure laser respectifs étant en particulier très étroits et fortement pénétrants.

Le recours systématique à un cordon de soudure laser disposé du côté de la face externe 4B du couvercle 4 pour fixer audit couvercle 4 chacun desdits éléments de liaison métallique 6, 7, 8, 9, 10 présente un certain nombre d'avantages.

Ainsi, il est possible grâce à l'invention de limiter le recours à d'éventuelles opérations de reprise (nettoyage, polissage...) de la face interne 4A du couvercle, les cordons de soudure laser ne laissant aucune trace perceptible sur la face interne 4A, de sorte qu'aucun masquage ou traitement ultérieur n'est nécessaire pour supprimer d'éventuels défauts qui s'avèrent en pratique sensiblement inexistants, ce qui permet de faciliter le processus de fabrication et de réduire les coûts afférents.

En outre, il s'avère que le recours à des cordons de soudure laser, qui plus est exclusivement disposés du côté de la face externe 4B couvercle 4, permet d'assurer un niveau de tenue mécanique suffisant au regard des efforts auxquels les éléments de liaison métallique 6, 7, 8, 9, 10 sont destinés à être soumis.

Enfin, l'invention a mis en évidence qu'il était possible, en adoptant la conception de l'invention, d'obtenir une tenue mécanique optimale et un aspect de la face interne 4A irréprochable même avec un couvercle 4 réalisé en acier inoxydable dont l'épaisseur E (qui correspond à la distance séparant les faces interne 4A et externe 4B) est réduite. L'invention permet ainsi un excellent résultat avec un couvercle 4 en acier inoxydable dont l'épaisseur E est inférieure à 1,5 mm, de préférence inférieure à 1,2 mm, et de façon encore plus préférentielle inférieure à 1 mm. De façon particulièrement avantageuse, conformément au mode de réalisation illustré aux figures, l'épaisseur E est avantageusement égale à environ 0,9 mm, de sorte que le couvercle 4 est particulièrement léger.

L'invention permet ainsi, grâce à la conception spécifique retenue, d'obtenir un sous-ensemble de couvercle 1 qui est non seulement très robuste mais est également facile à fabriquer (les cordons de soudure laser peuvent être réalisés de façon extrêmement rapide et automatisée) avec un aspect irréprochable immédiatement après la réalisation des cordons de soudure laser respectifs, sans qu'il ne soit nécessaire de mettre en oeuvre d'opérations de masquage ou de reprise afin de supprimer des défauts éventuels sur la face interne 4A et/ou externe 4B.

L'invention permet ainsi d'optimiser la masse du sous-ensemble de couvercle 1, en utilisant une épaisseur de métal réduite au maximum. L'épaisseur E est ainsi choisie uniquement en fonction des contraintes d'utilisation du couvercle 4, et non en fonction des contraintes de fixation de la pluralité d'éléments de liaison métallique 6, 7, 8, 9, 10 sur le couvercle 4.

Afin d'optimiser les avantages énumérés ci-avant, tous les composants attachés directement au couvercle 4 font de préférence partie de ladite pluralité d'éléments métalliques. Cela signifie que, conformément à un mode de réalisation particulièrement avantageux de l'invention, tous les éléments fixés directement au couvercle 4 sont disposés du même côté du couvercle 4, c'est-à-dire du côté de la face externe 4B, et sont tous attachés à ladite face externe 4B au moyen d'un cordon de soudure laser, de sorte qu'aucune pièce n'est rapportée et fixée au couvercle 4 par un autre moyen qu'un cordon de soudure laser.

Lesdits éléments de liaison métallique 6, 7, 8, 9, 10 sont avantageusement disposés soit sur et contre la face externe 4B, soit passent au travers de cette dernière, auquel cas une ouverture est ménagée à travers le couvercle 4 (par exemple au moyen d'une opération de poinçonnage) pour permettre le passage de l'élément de liaison métallique concerné.

Avantageusement, au moins l'un, et de préférence chacun, desdits cordons de soudure laser s'étend longitudinalement suivant un contour en forme de boucle fermée, afin de suivre le profil de l'interface entre chaque élément de liaison métallique 6, 7, 8, 9, 10 et la face externe 4B.

De préférence, chacun desdits cordons de soudure laser s'étend continûment autour de l'élément métallique concerné 6, 7, 8, 9, 10. L'invention a mis en évidence que le recours à un simple cordon de soudure laser continu permet, lorsque l'élément de liaison métallique concerné 8 est associé à un orifice ménagé à travers le couvercle 4, d'obturer de manière étanche l'interface entre l'orifice en question et l'élément métallique concerné 8, et ce de façon particulièrement fiable et durable, y compris lorsque l'enceinte de cuisson monte en pression pour atteindre par exemple une pression de fonctionnement qui excède la pression atmosphérique d'une valeur qui est comprise entre sensiblement 10 et 120 kPa, et qui est de préférence de l'ordre de 100 kPa.

Le recours à un cordon de soudure laser continu n'est toutefois pas obligatoire, et il est par exemple tout à fait envisageable, surtout si une fonction d'étanchéité n'est pas nécessaire, de recourir à un cordon de soudure laser par point.

Avantageusement, le sous-ensemble de couvercle 1 comprend un joint annulaire d'étanchéité (non représenté), par exemple réalisé en un matériau élastomère et pourvu d'une ou plusieurs lèvres, disposé en regard de la face interne 4A du couvercle 4, à la périphérie dudit couvercle 4, de façon par exemple à suivre le contour de la ceinture annulaire (et éventuellement à venir en appui contre cette dernière). Dans ce mode de réalisation, il est tout à fait envisageable que des éléments métalliques 6, 7 de ladite pluralité d'éléments métalliques soient disposés sur la face externe 4B du couvercle 4, à la périphérie de ce dernier, de façon qu'avantageusement lesdits éléments métalliques 6, 7 soient disposés au droit du joint annulaire d'étanchéité, c'est-à-dire à l'aplomb de la ligne d'étanchéité dudit joint. L'invention trouve un intérêt particulier dans ce mode de réalisation. En effet, il est indispensable que la face interne 4A soit, dans la zone d'étanchéité en question, parfaitement lisse et plane, aucun défaut géométrique, en particulier de type retassure, n'étant autorisé à cet endroit puisque cela pourrait rompre l'étanchéité de l'enceinte de cuisson. L'invention permet ainsi, tout en mettant en oeuvre une épaisseur E de couvercle réduite, de garantir un excellent état de surface dans la zone d'étanchéité du joint, sans qu'il ne soit besoin de recourir à une quelconque opération de reprise de la face interne 4A.

L'invention permet également de faire en sorte que des éléments métalliques 8, 9, 10 de ladite pluralité d'éléments métalliques soient disposés sur la face externe 4B du couvercle 4 à une distance du centre du couvercle 4 qui est inférieure à la distance les séparant du bord périphérique dudit couvercle 4. Dans ce cas de figure, les zones de la face interne 4A situées au droit desdits éléments métalliques 8, 9, 10 seront en effet exemptes de tout défaut (coloration, déformation) de sorte qu'elles peuvent rester parfaitement visibles et n'ont pas besoin de se trouver vers la périphérie du couvercle 4 pour être masquées par exemple par le joint d'étanchéité.

Avantageusement, ladite pluralité d'éléments métalliques comprend au moins un axe 9, 10 pourvu d'une embase 9A, 10A plaqué sur et contre ladite face externe 4B du couvercle 4, ledit cordon de soudure laser respectif 11 s'étendant à cheval sur la face externe 4B et l'embase 9A, 10A. Chaque axe 9, 10 se présente par exemple sous la forme d'une pièce tubulaire pourvue à l'une de ses extrémités d'une collerette formant embase 9A, 10A, ladite embase étant destinée à reposer sur et contre une zone dédiée 90, 100 de la face externe 4B du couvercle 4. Le cordon de soudure laser 11 s'étend ainsi à l'interface entre la périphérie de la collerette formant embase 9A, 10A et la face externe 4B (cf. figure 8).

Avantageusement, le sous-ensemble de couvercle 1 comprend au moins une ouverture 80 ménagée à travers le couvercle 4, ladite ouverture 80 étant, comme illustré par exemple à la figure 5, traversante, c'est-à-dire ménagée à travers toute l'épaisseur E du couvercle 4. Dans ce cas, ladite pluralité d'éléments métalliques comprend avantageusement au moins une douille 13 formée d'une portion inférieure 13A et d'une portion supérieure 13B séparées par un épaulement 13C. Ladite douille 13 est avantageusement enfilée dans ladite ouverture 80 avec ledit épaulement 13C en appui contre la face interne 4B du couvercle 4, la portion supérieure 13B dépassant à travers ladite ouverture 80 et faisant saillie de ladite face externe 4B du couvercle 4 (cf. figure 7). Dans ce cas, le cordon de soudure laser respectif 12 s'étend avantageusement à cheval sur la face externe 4B et la portion supérieure 13B de la douille 13 qui émerge de la face externe 4B à travers l'ouverture 80. Avantageusement, le cordon de soudure laser 12 est dans ce cas (illustré à la figure 7) un cordon sensiblement continu et fermé sur lui-même (en forme de boucle), afin de réaliser une fonction d'étanchéité empêchant toute fuite de vapeur à l'interface douille 13 / face externe 4B /ouverture 80, y compris lorsque l'appareil est sous pression. La douille 13 peut servir par exemple de logement et de guide à un doigt de sécurité 14 monté à coulissement axial, sous l'effet de la pression régnant au sein de l'enceinte de cuisson, entre une position basse qui autorise la fuite de vapeur par la douille 13, et une position haute d'étanchéité atteinte dès que la pression excède un seuil prédéterminé et dans laquelle le doigt 14 obture la douille 13 empêchant la fuite de vapeur vers l'extérieur. La douille 13 sert ainsi à lier à coulissement le doigt de sécurité 14 au couvercle 4.

Avantageusement, le sous-ensemble de couvercle 1 comprend un support 15 attaché, de préférence de façon permanente, audit couvercle 4 de façon que ce dernier puisse pivoter relativement audit support 15, entre par exemple deux positions correspondant respectivement à une configuration de déverrouillage et une configuration de verrouillage. Ainsi, dans le cas illustré aux figures où le système de verrouillage/déverrouillage est un système à baïonnette, la configuration de déverrouillage correspond à une position relative du couvercle 4 et de la cuve 2 dans laquelle les rampes de cuve et de couvercle sont décalées angulairement, tandis que la configuration de verrouillage correspond à une mise en correspondance des rampes de couvercle et des rampes de cuve, les rampes de couvercle étant alors disposées sous les rampes de cuve pour empêcher la séparation du couvercle 4 et de la cuve 2. La position relative du support 15 et du couvercle 4 est avantageusement commandée manuellement au moyen d'un organe de commande manuelle 16 qui fait partie du sous-ensemble de couvercle 1 et qui est monté mobile relativement au support 15. Par exemple, l'organe de commande manuelle 16 se présente sous la forme d'une anse pivotante conçue pour tourner relativement au support 15 entre une position déployée (illustrée à la figure 3) dans laquelle elle s'élève sensiblement verticalement et qui correspond à la configuration de déverrouillage, et une configuration rabattue (figure 1 et 2) qui correspond à configuration de verrouillage. L'invention n'est toutefois absolument pas limitée à un système de verrouillage baïonnette, et il est par exemple tout à fait envisageable que l'appareil de cuisson sous pression soit pourvu d'un système de verrouillage à mâchoires, à segments, à couvercle flexible déformable ou à étriers par exemple, sans pour autant que l'on sorte du cadre de l'invention. L'invention s'avère d'ailleurs particulièrement intéressante pour les appareils reposant sur la déformation d'un couvercle flexible, qui nécessitent de recourir de par leur conception même à un couvercle de faible épaisseur. De la même façon, l'invention n'est en aucun cas limitée à la mise en oeuvre d'un organe de commande manuelle qui se présente sous la forme d'une anse rotative, et il est par exemple tout à fait envisageable que l'organe de commande en question se présente alternativement sous la forme d'une poignée fixe (destinée à permettre à un utilisateur de faire pivoter directement à la main le couvercle entre les configurations de verrouillage et déverrouillage), ou d'un bouton-poussoir, d'un levier, d'un bouton rotatif, etc. sans pour autant que l'on sorte du cadre invention.

De préférence, ladite pluralité d'éléments métalliques 6, 7, 8, 9, 10 comprend des organes de liaison du support 15 au couvercle 4.

Conformément au mode de réalisation préférentiel illustré aux figures, ledit support 15 est disposé sur la face externe 4B qu'il recouvre au moins en partie. De préférence, ledit support 15 recouvre ladite pluralité d'éléments métalliques 6, 7, 8, 9, 10 qui sont ainsi masqués par ledit support 15, de préférence en permanence, quelle que soit la position relative du couvercle 4 et du support 15.

Avantageusement, le support 15 est pourvu d'au moins une gorge 17 qui s'étend à proximité de la périphérie du couvercle 4. Ladite gorge 17 (visible aux figures 2 et 3 dans lesquelles une pièce de masquage clipsée sur le support 15 a été omise) s'étend avantageusement selon un profil en arc de cercle, lesdites organes de liaison du support 15 au couvercle 4 comprenant au moins un goujon 6, 7 qui passe à travers ladite gorge 17 et auquel est attachée une pièce de retenue (par exemple du type goupille ou circlips - non illustrée) du support 15, pour limiter localement l'écartement du support 15 relativement au couvercle 4. Dans ce mode de réalisation préférentiel, le support 15 se présente avantageusement sous la forme d'une traverse en matière plastique pourvue à chacune de ses extrémités d'une gorge 17 à travers laquelle passe un goujon 6, 7 dont l'extrémité supérieure libre est associée à ladite pièce de retenue pour empêcher les extrémités de la traverse formant le support 15 de s'écarter du couvercle 4 au-delà d'un seuil prédéterminé, sous l'effet de la montée en pression dans l'enceinte de cuisson (qui occasionne une flexion du couvercle 4). Chaque goujon 6, 7 peut ainsi circuler librement dans la gorge 17 en arc de cercle correspondante, tout en retenant localement, grâce à la pièce de retenue (non illustrée) qui lui est attachée, l'extrémité du support 15 relativement à la périphérie du couvercle 4. Les goujons 6, 7 ainsi implantés et solidarisés par un cordon de soudure laser à la face externe 4B du couvercle 4 sont sollicités par un effort axial, vertical, auquel le cordon de soudure laser correspondant est parfaitement capable de résister quel que soit le degré de flexion du couvercle sous l'effet de la montée en pression de l'enceinte de cuisson.

Avantageusement, lesdits organes de liaison du support 15 au couvercle 4 comprennent au moins un axe central de fixation 10 qui s'élève à partir du centre de la face externe 4B du couvercle 4 et autour duquel tourne le support 15. L'axe central de fixation 10 se présente par exemple sous la forme d'un axe creux fileté qui traverse localement le support 15 et au sein duquel est vissé une vis 18 qui permet de maintenir axialement le support 15 tout en autorisant la rotation relative, autour dudit axe central de fixation 10, du couvercle 4 et du support 15.

Dans le mode de réalisation illustré aux figures, la pluralité d'éléments métalliques comprend également un axe excentré 9 qui sert de pivot à une biellette qui fait partie d'un mécanisme de transformation du mouvement de pivotement de la poignée formant organe de commande manuelle 16 relativement au support 15 en mouvement de rotation du couvercle 4 relativement au support 15.

L'invention concerne par ailleurs en tant que tel un procédé de fabrication d'un sous-ensemble de couvercle 1, lequel sous-ensemble de couvercle 1 est de préférence conforme à l'invention et à la description qui précède, c'est-à-dire qu'il est en particulier destiné à être associé à une cuve 2 d'appareil de cuisson d'aliments sous pression 3 pour former avec cette dernière une enceinte de cuisson sous pression. Comme évoqué précédemment, ledit sous-ensemble de couvercle 1 objet du procédé de fabrication selon l'invention comprend une pluralité de composants parmi lesquels au moins un couvercle métallique 4 et une pluralité d'éléments de liaison métallique 6, 7, 8, 9, 10.

Le procédé de fabrication selon l'invention comprend au moins les étapes suivantes :
- une étape de fabrication ou de fourniture dudit couvercle métallique 4, lequel présente, comme exposé précédemment, une face interne 4A destinée à se trouver en regard de l'intérieur de ladite enceinte de cuisson et une face externe 4B opposée,
- et une étape de fixation de ladite pluralité d'éléments de liaison métallique 6, 7, 8, 9, 10 au couvercle 4, au cours de laquelle lesdits éléments métalliques 6, 7, 8, 9, 10 sont attachés au couvercle de façon permanente et indémontable et de façon à faire saillie de ladite face externe 4B pour relier mécaniquement ledit couvercle 4 avec d'autres composants 14, 15 dudit sous-ensemble de couvercle 1.

Conformément au procédé selon l'invention, chacun desdits éléments métalliques 6, 7, 8, 9, 10 est attaché audit couvercle 4 exclusivement au moyen d'un procédé de soudure laser, de façon à ce que chaque cordon de soudure laser respectif s'étende uniquement sur à la fois ladite face externe 4B et l'élément métallique concerné 6, 7, 8, 9, 10.

Le procédé permet ainsi d'obtenir très rapidement et à moindre coût un sous-ensemble de couvercle 1 léger et prêt à l'emploi (sans défaut de type retassure ou coloration sur la face interne 4A du couvercle 4). Les étapes de soudure laser peuvent en outre être intégrées dans un flux d'assemblage, et ainsi permettre une adaptation finale du sous-ensemble de couvercle 1 pour une personnalisation retardée et optimisée.

Ainsi, selon l'invention, toutes les pièces 6, 7, 8, 9, 10 implantées sur le couvercle 4 sont fixées d'un même côté, sur la face externe 4B, par soudage laser, ce qui permet d'obtenir une face interne 4A du couvercle 4 sans défaut ni aspérité (donc facile à nettoyer) et sans zone favorisant l'encrassement. Le recours au soudage laser permet en particulier de ne pas endommager la face interne du couvercle 4, même si l'épaisseur E de ce dernier est faible, de sorte qu'il n'est pas nécessaire d'avoir recours à des opérations de reprise pour masquer d'éventuels défauts du type rétreint localisé, coloration due à la surchauffe, *etc.* Dans le cas où la pièce à fixer est une douille insérée dans un poinçonnage ménagé à travers toute l'épaisseur du couvercle 4, le procédé de soudure laser permet également d'assurer un joint de soudure continu et étanche à l'interface couvercle 4 / douille 13 de façon particulièrement rapide, fiable et bon marché.

## Revendications

1. Sous-ensemble de couvercle (1) destiné à être associé à une cuve (2) d'appareil de cuisson d'aliments sous pression (3) pour former avec cette dernière une enceinte de cuisson sous pression, ledit sous-ensemble de couvercle (1) comprenant une pluralité de composants parmi lesquels au moins :
- un couvercle métallique (4) présentant une face interne (4A) destinée à se trouver en regard de l'intérieur de ladite enceinte et une face externe opposée (4B),
- et une pluralité d'éléments de liaison métalliques (6, 7, 8, 9, 10) attachés de façon permanente et indémontable au couvercle (4) et de façon à faire saillie de ladite face externe (4B) pour relier mécaniquement ledit couvercle (4) avec d'autres composants dudit sous-ensemble de couvercle (1),
**caractérisé en ce que** chacun desdits éléments de liaison métalliques (6, 7, 8, 9, 10) est attaché audit couvercle (4) exclusivement au moyen d'un cordon de soudure laser respectif (11, 12) qui s'étend uniquement sur à la fois ladite face externe (4B) et l'élément métallique (6, 7, 8, 9, 10) concerné.

2. Sous-ensemble de couvercle (1) selon la revendication 1 **caractérisé en ce que** ledit couvercle (4) est réalisé en acier inoxydable et présente une épaisseur (E) inférieure à 1,5 mm, de préférence inférieure à 1,2 mm, de façon encore plus préférentielle inférieure à 1 mm, par exemple égale à environ 0,9 mm.

3. Sous-ensemble de couvercle (1) selon la revendication 1 ou 2 **caractérisé en ce que** ledit couvercle (4) est formé par un flan métallique embouti.

4. Sous-ensemble (1) de couvercle selon l'une quelconque des revendications 1 à 3 **caractérisé en ce que** chacun desdits cordons de soudure laser s'étend longitudinalement suivant un contour en forme de boucle fermée.

5. Sous-ensemble de couvercle (1) selon l'une quelconque des revendications 1 à 4 **caractérisé en ce que** chacun desdits cordons de soudure laser s'étend continûment autour de l'élément métallique concerné (6, 7, 8, 9, 10).

6. Sous-ensemble de couvercle (1) selon l'une quelconque des revendications 1 à 5 **caractérisé en ce que** ladite pluralité d'éléments métalliques comprend au moins un axe (9, 10) pourvue d'une embase (9A, 10A) plaquée sur et contre ladite face externe (4B) du couvercle (4), ledit cordon de soudure laser respectif (11) s'étendant à cheval sur la face externe (4B) et l'embase (9A, 10A).

7. Sous-ensemble de couvercle (1) selon l'une quelconque des revendications 1 à 6 **caractérisé en ce qu'**il comprend au moins une ouverture (80) ménagée à travers ledit couvercle (4) et **en ce que** ladite pluralité d'éléments métalliques comprend au moins une douille (13) formée d'une portion inférieure (13A) et d'une portion supérieure (13B) séparées par un épaulement (13C), ladite douille (13) étant enfilée dans ladite ouverture (80) avec ledit épaulement (13C) en appui contre ladite face interne (4A), ladite portion supérieure (13B) passant à travers ladite ouverture (80) et faisant saillie de ladite face externe (4B) du couvercle (4), ledit cordon de soudure laser respectif (12) s'étendant à cheval sur la face externe (4B) et la portion supérieure (13B).

8. Sous-ensemble de couvercle (1) selon l'une quelconque des revendications précédentes **caractérisé en ce qu'**il comprend un support (15) attaché audit couvercle (4) de façon que ce dernier puisse pivoter relativement audit support (15), ladite pluralité d'éléments métalliques (6, 7, 8, 9, 10) comprenant des organes de liaison du support (15) au couvercle (4).

9. Sous-ensemble de couvercle (1) selon la revendication 8 **caractérisé en ce que** ledit support (15) recouvre ladite pluralité d'éléments métalliques (6, 7, 8, 9, 10) qui sont ainsi masqués par ledit support (15).

10. Sous-ensemble de couvercle (1) selon la revendication 8 ou 9 **caractérisé en ce que** ledit support (15) est pourvu d'au moins une gorge (17) qui s'étend à proximité de la périphérie du couvercle (4) selon un profil en arc de cercle, lesdits organes de liaison du support (15) au couvercle (4) comprenant au moins un goujon (6, 7) qui passe à travers ladite gorge (17) et auquel est attachée une pièce de retenue du support (15) pour limiter localement l'écartement du support (15) relativement au couvercle (4).

11. Sous-ensemble de couvercle (1) selon l'une quelconque des revendications 8 à 10 **caractérisé en ce que** lesdits organes de liaison du support (15) au couvercle (4) comprennent au moins un axe central de fixation (10) qui s'élève à partir du centre de la face externe (4B) du couvercle (4) et autour duquel tourne le support (15).

12. Sous-ensemble de couvercle (1) selon l'une des revendications 1 à 11 **caractérisé en ce que** des éléments métalliques (8, 9, 10) de ladite pluralité d'éléments de liaison métalliques sont disposés sur la face externe (4B) du couvercle (4) à une distance du centre du couvercle (4) qui est inférieure à la distance les séparant du bord périphérique dudit couvercle (4).

13. Sous-ensemble de couvercle (1) selon l'une des revendications 1 à 12 **caractérisé en ce que** tous les composants attachés directement au couvercle (4) font partie de ladite pluralité d'éléments métalliques (6, 7, 8, 9, 10).

14. Appareil de cuisson sous pression (3) comprenant un sous-ensemble de couvercle (1) selon l'une des revendications 1 à 13.

15. Procédé de fabrication d'un sous-ensemble de couvercle (1), lequel sous-ensemble de couvercle (1) est destiné à être associé à une cuve (2) d'appareil de cuisson d'aliments sous pression (3) pour former avec cette dernière une enceinte de cuisson sous pression, ledit sous-ensemble de couvercle (1) comprenant une pluralité de composants parmi lesquels au moins un couvercle métallique (4) et une pluralité d'éléments de liaison métalliques (6, 7, 8, 9, 10), ledit procédé comprenant au moins les étapes suivantes :
- une étape de fabrication ou de fourniture dudit couvercle métallique (4), lequel présente une face interne (4A) destinée à se trouver en regard de l'intérieur de ladite enceinte et une face externe (4B) opposée,
- et une étape de fixation de ladite pluralité d'éléments de liaison métalliques (6, 7, 8, 9, 10) au couvercle (4), au cours de laquelle lesdits éléments métalliques (6, 7, 8, 9, 10) sont attachés au couvercle (4) de façon permanente et indémontable et de façon à faire saillie de ladite face externe (4B) pour relier mécaniquement ledit couvercle (4) avec d'autres composants (14, 15) dudit sous-ensemble de couvercle (1),
**caractérisé en ce que** chacun desdits éléments métalliques (6, 7, 8, 9, 10) est attaché audit couvercle (4) exclusivement au moyen d'un procédé de soudure laser, de façon à ce que chaque cordon de soudure laser respectif s'étende uniquement sur à la fois ladite face externe (4B) et l'élément métallique concerné (6, 7, 8, 9, 10).

## Patentansprüche

1. Untereinheit eines Deckels (1), die dazu bestimmt ist, mit einer Wanne (2) eines Druckkochtopfs (3) für Nahrungsmittel verbunden zu sein, um mit dieser letztgenannten einen Garraum unter Druck zu bilden, wobei die Untereinheit eines Deckels (1) eine Mehrzahl von Komponenten umfasst, unter anderem mindestens:
- einen metallischen Deckel (4), der eine Innenseite (4A), die dazu bestimmt ist, sich gegenüber dem Inneren des Raums zu befinden, und eine gegenüberliegende Außenseite (4B) aufweist,
- und eine Mehrzahl von metallischen Verbindungselementen (6, 7, 8, 9, 10), die permanent und nicht demontierbar am Deckel (4) befestigt sind, so dass sie aus der Außenseite (4B) herausragen, um den Deckel (4) mechanisch mit weiteren Komponenten der Deckeluntereinheit (1) zu verbinden,
**dadurch gekennzeichnet, dass** jedes der metallischen Verbindungselemente (6, 7, 8, 9, 10) am Deckel (4) ausschließlich mit Hilfe einer jeweiligen Laserschweißnaht (11, 12) befestigt ist, die sich nur sowohl auf der Außenseite (4B) als auch auf dem betreffenden metallischen Element (6, 7, 8, 9, 10) erstreckt.

2. Untereinheit eines Deckels (1) nach Anspruch 1, **dadurch gekennzeichnet, dass** der Deckel (4) aus rostfreiem Stahl hergestellt ist und eine Dicke (E) unter 1,5 mm, vorzugsweise unter 1,2 mm, noch bevorzugter unter 1 mm, beispielsweise gleich ungefähr 0,9 mm, aufweist.

3. Untereinheit eines Deckels (1) nach einem der Ansprüche 1 oder 2, **dadurch gekennzeichnet, dass** der Deckel (4) aus einer gezogenen Metallplatte gebildet ist.

4. Untereinheit eines Deckels (1) nach einem der Ansprüche 1 bis 3, **dadurch gekennzeichnet, dass** sich jede der Laserschweißnähte längs entlang einer Kontur in Form einer geschlossenen Schleife erstreckt.

5. Untereinheit eines Deckels (1) nach einem der Ansprüche 1 bis 4, **dadurch gekennzeichnet, dass** sich jede der Laserschweißnähte kontinuierlich um das betreffende metallische Element (6, 7, 8, 9, 10) erstreckt.

6. Untereinheit eines Deckels (1) nach einem der Ansprüche 1 bis 5, **dadurch gekennzeichnet, dass** die Mehrzahl von metallischen Elementen mindestens eine Achse (9, 10) umfasst, die mit einem Sockel (9A, 10A) versehen ist, der auf und gegen die Außenseite (4B) des Deckels (4) gedrückt ist, wobei sich die jeweilige Laserschweißnaht (11) quer über die Außenseite (4B) und den Sockel (9A, 10A) erstreckt.

7. Untereinheit eines Deckels (1) nach einem der Ansprüche 1 bis 6, **dadurch gekennzeichnet, dass** sie mindestens eine Öffnung (80) umfasst, die durch den Deckel (4) hindurch verläuft, und dass die Mehrzahl von metallischen Elementen mindestens eine Büchse (13) umfasst, die von einem unteren Abschnitt (13A) und einem oberen Abschnitt (13B), die durch einen Absatz (13C) getrennt sind, gebildet ist, wobei die Büchse (13) in die Öffnung (80) eingeschoben ist, wobei der Absatz (13C) an der Innenseite (4A) anliegt, wobei der obere Abschnitt (13B) durch die Öffnung (80) hindurch verläuft und aus der Außenseite (4B) des Deckels (4) herausragt, wobei sich die jeweilige Laserschweißnaht (12) quer über die Außenseite (4B) und den oberen Abschnitt (13B) erstreckt.

8. Untereinheit eines Deckels (1) nach einem der vorhergehenden Ansprüche, **dadurch gekennzeichnet, dass** sie einen Träger (15) umfasst, der am Deckel (4) befestigt ist, so dass dieser letztgenannte in Bezug zum Träger (15) schwenken kann, wobei die Mehrzahl von metallischen Elementen (6, 7, 8, 9, 10) Elemente zur Verbindung des Trägers (15) mit dem Deckel (4) umfasst.

9. Untereinheit eines Deckels (1) nach Anspruch 8, **dadurch gekennzeichnet, dass** der Träger (15) die Mehrzahl von metallischen Elementen (6, 7, 8, 9, 10) bedeckt, die somit vom Träger (15) verdeckt sind.

10. Untereinheit eines Deckels (1) nach Anspruch 8 oder 9, **dadurch gekennzeichnet, dass** der Träger (15) mit mindestens einer Rille (17) versehen ist, die sich in der Nähe des Umfangsrands des Deckels (4) nach einem kreisbogenförmigen Profil erstreckt, wobei die Elemente zur Verbindung des Trägers (15) mit dem Deckel (4) mindestens einen Stift (6, 7) umfassen, der durch die Rille (17) hindurch verläuft und an dem ein Halteelement des Trägers (15) befestigt ist, um lokal die Entfernung des Trägers (15) in Bezug zum Deckel (4) zu begrenzen.

11. Untereinheit eines Deckels (1) nach einem der Ansprüche 8 bis 10, **dadurch gekennzeichnet, dass** die Elemente zur Verbindung des Trägers (15) mit dem Deckel (4) mindestens eine zentrale Befestigungsachse (10) umfassen, die von der Mitte der Außenseite (4B) des Deckels (4) aufragt und um die sich der Träger (15) dreht.

12. Untereinheit eines Deckels (1) nach einem der Ansprüche 1 bis 11, **dadurch gekennzeichnet, dass** metallische Elemente (8, 9, 10) der Mehrzahl von metallischen Verbindungselementen auf der Außenseite (4B) des Deckels (4) in einem Abstand zur Mitte des Deckels (4) angeordnet sind, der kleiner als der Abstand ist, der sie vom Umfangsrand des Deckels (4) trennt.

13. Untereinheit eines Deckels (1) nach einem der Ansprüche 1 bis 12, **dadurch gekennzeichnet, dass** alle direkt am Deckel (4) befestigten Komponenten Teil der Mehrzahl von metallischen Elementen (6, 7, 8, 9, 10) sind.

14. Druckkochtopf (3), umfassend eine Deckeluntereinheit (1) nach einem der Ansprüche 1 bis 13.

15. Verfahren zur Herstellung einer Untereinheit eines Deckels (1), wobei die Deckeluntereinheit (1) dazu bestimmt ist, mit einer Wanne (2) eines Druckkochtopfs (3) für Nahrungsmittel verbunden zu sein, um mit dieser letztgenannten einen Garraum unter Druck zu bilden, wobei die Deckeluntereinheit (1) eine Mehrzahl von Komponenten umfasst, unter anderem mindestens einen metallischen Deckel (4) und eine Mehrzahl von metallischen Verbindungselementen (6, 7, 8, 9, 10), wobei das Verfahren mindestens die folgenden Schritte umfasst:
- einen Schritt der Herstellung oder Bereitstellung des metallischen Deckels (4), der eine Innenseite (4A), die dazu bestimmt ist, sich gegenüber dem Inneren des Raums zu befinden, und eine gegenüberliegende Außenseite (4B) aufweist,
- und einen Schritt der Befestigung der Mehrzahl von metallischen Verbindungselementen (6, 7, 8, 9, 10) am Deckel (4), währenddessen die metallischen Elemente (6, 7, 8, 9, 10) am Deckel (4) permanent und nicht demontierbar befestigt werden, so dass sie aus der Außenseite (4B) herausragen, um den Deckel (4) mechanisch mit weiteren Komponenten (14, 15) der Deckeluntereinheit (1) zu verbinden,
**dadurch gekennzeichnet, dass** jedes der metallischen Elemente (6, 7, 8, 9, 10) am Deckel (4) ausschließlich mit Hilfe eines Laserschweißverfahrens verbunden wird, so dass sich jede jeweilige Laserschweißnaht nur sowohl auf der Außenseite (4B) als auch dem betreffenden metallischen Element (6, 7, 8, 9, 10) erstreckt.

## Claims

1. A lid subassembly (1) for associating with a vessel (2) of a utensil (3) for cooking food under pressure in order to co-operate therewith to form a pressure-cooking enclosure, said lid subassembly (1) comprising a plurality of components including at least:
- a metal lid (4) having an inside face (4A) for facing the inside of said enclosure and an opposite, outside face (4B); and
- a plurality of metal connection elements (6, 7, 8, 9, 10) attached in permanent and inseparable manner to the lid (4) so as to project from said outside face (4B) in order to connect said lid (4) mechanically with other components of said lid subassembly (1);
the subassembly being **characterized in that** each of said metal connection elements (6, 7, 8, 9, 10) is attached to said lid (4) exclusively by means of a respective laser weld bead (11, 12) that extends solely over both said outside face (4B) and the corresponding metal element (6, 7, 8, 9, 10).

2. A lid subassembly (1) according to claim 1, **characterized in that** said lid (4) is made of stainless steel and presents thickness (E) less than 1.5 mm, preferably less than 1.2 mm, still more preferably less than 1 mm, e.g. equal to about 0.9 mm.

3. A lid subassembly (1) according to claim 1 or claim 2, **characterized in that** said lid (4) is formed by a stamped metal blank.

4. A lid subassembly (1) according to any one of claims 1 to 3, **characterized in that** each of said laser weld beads extends longitudinally following an outline of closed-loop shape.

5. A lid subassembly (1) according to any one of claims 1 to 4, **characterized in that** each of said laser weld beads extends continuously around the corresponding metal element (6, 7, 8, 9, 10).

6. A lid subassembly (1) according to any one of claims 1 to 5, **characterized in that** said plurality of metal elements comprises at least one pin (9, 10) having a base (9A, 10A) pressed on and against said outside face (4B) of the lid (4), said respective laser weld bead (11) extending across the outside face (4B) and the base (9A, 10A).

7. A lid subassembly (1) according to any one of claims 1 to 6, **characterized in that** it includes at least one opening (80) formed through said lid (4) and **in that** said plurality of metal elements comprises at least one bushing (13) formed by a bottom portion (13A) and a top portion (13B) separated by a shoulder (13C), said bushing (13) being threaded through said opening (80) with said shoulder (13C) bearing against said inside face (4A), said top portion (13B) passing through said opening (80) and projecting from said outside face (4B) of the lid (4), said corresponding laser weld bead (12) extending across the outside face (4B) and the top portion (13B).

8. A lid subassembly (1) according to any preceding claim, **characterized in that** it includes a support (15) attached to said lid (4) in such a manner as to enable the lid to pivot relative to said support (15), said plurality of metal elements (6, 7, 8, 9, 10) including members for connecting the support (15) to the lid (4).

9. A lid subassembly (1) according to claim 8, **characterized in that** said support (15) covers said plurality of metal elements (6, 7, 8, 9, 10), which are thus masked by said support (15).

10. A lid subassembly (1) according to claim 8 or claim 9, **characterized in that** said support (15) is provided with at least one slot (17) extending in the proximity of the periphery of the lid (4) following a circularly arcuate profile, said members for connecting the support (15) to the lid (4) comprising at least one stud (6, 7) passing through said slot (17) and having attached thereto a part for retaining the support (15) in order to limit locally the spacing of the support (15) relative to the lid (4).

11. A lid subassembly (1) according to any one of claims 8 to 10, **characterized in that** said members for connecting the support (15) to the lid (4) comprise at least one central fastener pin (10) that projects from the center of the outside face (4B) of the lid (4) and about which the support (15) pivots.

12. A lid subassembly (1) according to any one of claims 1 to 11, **characterized in that** metal elements (8, 9, 10) of said plurality of metal elements are arranged on the outside face (4B) of the lid (4) at a distance from the center of the lid (4) that is less than the distance between them and the peripheral edge of said lid (4).

13. A lid subassembly (1) according to any one of claims 1 to 12, **characterized in that** all of the components attached directly to the lid (4) form part of said plurality of metal elements (6, 7, 8, 9, 10).

14. A pressure-cooking utensil (3) including a lid subassembly (1) according to any one of claims 1 to 13.

15. A method of fabricating a lid subassembly (1), which lid subassembly (1) is for associating with a vessel (2) of a utensil (3) for cooking food under pressure in order to co-operate therewith to form a pressure-cooking enclosure, said lid subassembly (1) comprising a plurality of components including at least one metal lid (4) and a plurality of metal connection elements (6, 7, 8, 9, 10), said method comprising at least the following steps:
- a step of fabricating or supplying said metal lid (4), which lid presents an inside face (4A) for facing the inside of said enclosure, and an opposite, outside face (4B); and
- a step of fastening said plurality of metal connection elements (6, 7, 8, 9, 10) to the lid (4), during which said metal elements (6, 7, 8, 9, 10) are attached to the lid (4) in permanent and inseparable manner so as to project from said outside face (4B) in order to connect said lid (4) mechanically with other components (14, 15) of said lid subassembly (1);
the method being **characterized in that** each of said metal elements (6, 7, 8, 9, 10) is attached to said lid (4) exclusively by means of a laser welding method so that each respective laser weld bead extends solely over both said outside face (4B) and the corresponding metal element (6, 7, 8, 9, 10).
